# EUROPÄISCHE PATENTSCHRIFT

(11) **EP 3 797 231 B1**
(45) Veröffentlichungstag und Bekanntmachung des Hinweises auf die Patenterteilung: **06.07.2022**
(21) Anmeldenummer: 19724755.4
(22) Anmeldetag: 07.05.2019
(51) Int. Cl.: F16H 61/688, F16H 59/18

(54) **ANTRIEBSSTRANG FÜR EIN KRAFTFAHRZEUG UND VERFAHREN ZUM BETREIBEN DESSELBEN**
DRIVE TRAIN FOR A MOTOR VEHICLE AND METHOD FOR OPERATING THE DRIVE TRAIN
CHAÎNE CINÉMATIQUE D'UN VÉHICULE AUTOMOBILE ET PROCÉDÉ POUR FAIRE FONCTIONNER UNE CHAÎNE CINÉMATIQUE

(30) Priorität: 23.05.2018 DE 102018208084
(43) Veröffentlichungstag der Anmeldung: 31.03.2021
(73) Patentinhaber: Magna PT B.V. & Co. KG, 74199 Untergruppenbach (DE)
(72) Erfinder: PROST, Jacques, 74074 Heilbronn (DE); KECK, Ingo, 74199 Untergruppenbach (DE); FILP, Mathias, 74199 Untergruppenbach (DE); WENDT, Moritz, 74199 Untergruppenbach (DE); STEPPER, Thorsten, 74638 Waldenburg (DE); SCHALLER, Martin, 64732 Bad König (DE)
(74) Vertreter: Rausch, Gabriele
(86) Internationale Anmeldenummer: PCT/EP2019/061706
(87) Internationale Veröffentlichungsnummer: WO 2019/223998

(56) Entgegenhaltungen:
- EP-A1- 2 921 746
- DE-A1-102012 018 416
- DE-B3-102010 018 532

## Beschreibung

Die vorliegende Erfindung betrifft ein Verfahren zum Betreiben eines Antriebsstranges eines Kraftfahrzeuges, wobei der Antriebsstrang einen Verbrennungsmotor und ein Doppelkupplungsgetriebe aufweist, wobei das Doppelkupplungsgetriebe einen ersten Leistungsübertragungspfad mit einer ersten Reibkupplung und einem ersten Teilgetriebe sowie einen zweiten Leistungsübertragungspfad mit einer zweiten Reibkupplung und einem zweiten Teilgetriebe aufweist, und wobei der Verbrennungsmotor an ein Eingangsglied der ersten Reibkupplung und an ein Eingangsglied der zweiten Reibkupplung gekoppelt ist, wobei das Verfahren dazu dient, ausgehend von einem Zustand, bei dem das Kraftfahrzeug eine Geschwindigkeit größer als Null hat und bei dem beide Reibkupplungen geöffnet sind, Antriebsleistung des Verbrennungsmotors über eine niedrige Gangstufe in einem der Teilgetriebe auf einen Abtrieb zu führen.

Schließlich betrifft die vorliegende Erfindung einen Antriebsstrang der oben bezeichneten Art, mit einer Steuereinrichtung, die dazu ausgebildet und eingerichtet ist, ein Verfahren dieser Art durchzuführen.

Kraftfahrzeug-Antriebsstränge mit Doppelkupplungsgetriebe sind allgemein bekannt. Das Doppelkupplungsgetriebe weist zwei Teilgetriebe auf, von denen eines in der Regel den geraden Gangstufen und das andere den ungeraden Gangstufen zugeordnet ist. Jeweils eines der Teilgetriebe ist aktiv und dient zur Leistungsübertragung. Im anderen Teilgetriebe kann eine Gangstufe vorgewählt werden, die als nächstes zu verwenden ist. Ein Gangwechsel erfolgt dann durch überschneidende Betätigung der zwei Reibkupplungen, so dass die Leistung von dem einen Leistungsübertragungspfad auf den anderen Leistungsübertragungspfad übergeben wird.

Ein Zustand, bei dem das Kraftfahrzeug eine Geschwindigkeit größer Null hat und bei dem beide Reibkupplungen geöffnet sind, kann bspw. ein Segelzustand sein. Hierbei rollt das Fahrzeug und der Verbrennungsmotor läuft, wobei die Drehzahl des Verbrennungsmotors bspw. nahe einer Leerlaufdrehzahl ist.

Zum Führen von Antriebsleistung über eine niedrige Gangstufe in einem der Teilgetriebe ist es daher in der Regel erforderlich, die Drehzahl des Verbrennungsmotors zunächst anzuheben, um diese für die niedrige Gangstufe auf ein Niveau zu bringen, das an die Geschwindigkeit des Fahrzeugs angepasst ist. Je nach Differenz zwischen Fahrzeuggeschwindigkeit und entsprechender Drehzahl des Verbrennungsmotors kann es eine gewisse Zeit dauern, bis Antriebsleistung des Verbrennungsmotors auf den Abtrieb geführt werden kann.

Noch problematischer wird diese Zeitverzögerung dann, wenn der Verbrennungsmotor abgeschaltet ist, also eine Drehzahl von Null Umdrehungen hat. In diesem Fall muss der Verbrennungsmotor zunächst gestartet werden, und anschließend auf die Zieldrehzahl hochgedreht werden.

Aus der DE 10 2010 018 532 B3 ist ein Verfahren zum Schalten einer Doppelkupplung bekannt, wobei das Schalten des Getriebes über das Einlegen eines Stützgangs erfolgt.

Ein solches Verfahren ist auch aus der EP 2 921 746 bekannt.

Es ist vor diesem Hintergrund eine Aufgabe der Erfindung, ein verbessertes Verfahren zum Betreiben eines Hybrid-Antriebsstranges eines Kraftfahrzeuges sowie einen verbesserten Antriebsstrang eines Kraftfahrzeuges anzugeben.

Die obige Aufgabe wird zum einen gelöst durch ein Verfahren zum Betreiben eines Antriebsstranges eines Kraftfahrzeuges gemäß Anspruch 1.

Ferner wird die obige Aufgabe gelöst durch einen Antriebsstrang eines Kraftfahrzeuges gemäß Anspruch 2.

Das erfindungsgemäße Verfahren, das von dem oben beschriebenen Ausgangszustand ausgeht, ermöglicht es, schneller Antriebsleistung bzw. Antriebsmoment von dem anfänglich ausgeschalteten Verbrennungsmotor auf den Abtrieb zu führen. In der Zeit, in der der Verbrennungsmotor hochdreht, um die Zieldrehzahl zu erreichen, wird für einen Zeitraum von einem Zeitpunkt, an dem der Verbrennungsmotor die Zwischendrehzahl erreicht hat, bis zu dem Zeitpunkt, an dem der Verbrennungsmotor die Zieldrehzahl erreicht hat, bereits Antriebsleistung über die hohe Gangstufe in dem ersten Teilgetriebe auf den Abtrieb geführt.

Hierdurch ist es möglich, ausgehend von dem beschriebenen Zustand, bei dem das Kraftfahrzeug eine Geschwindigkeit größer als Null hat und bei dem beide Reibkupplungen geöffnet sind, schneller Antriebsleistung auf den Abtrieb zu führen. Dies kann die Fahrsicherheit erhöhen und kann ferner den Komfort für den Fahrer erhöhen.

Die Erfindung ist in einem Antriebsstrang der gattungsgemäßen Art vergleichsweise einfach implementierbar, bspw. durch eine Änderung einer Steuersoftware in einer Steuereinrichtung. Die Erfindung ist folglich kostengünstig umsetzbar.

Die Geschwindigkeit, die das Kraftfahrzeug bei dem Ausgangszustand hat, ist vorzugsweise eine Geschwindigkeit, die größer ist als 50 km/h und vorzugsweise größer als 70 km/h, insbesondere größer als 80 km/h und bevorzugt größer als 90 km/h. Vorzugsweise ist die Geschwindigkeit kleiner als 250 km/h.

In der erfindungagemäßen Ausführungsform ist der Verbrennungsmotor in dem Ausgangszustand abgeschaltet, muss also vor dem Erhöhen der Drehzahl des Verbrennungsmotors gestartet werden.

Das Starten des Verbrennungsmotors erfolgt durch Schließen von einer der Reibkupplungen. Im Hybrid-Antriebsstrang (siehe unten) kann das Anlassen des Verbrennungsmotors auch über eine elektrische Antriebsmaschine erfolgen.

Die niedrige Gangstufe ist vorzugsweise eine der Gangstufen 4, 3 oder 2, kann jedoch auch die Gangstufe 1, also die Anfahrgangstufe, sein.

Das Doppelkupplungsgetriebe weist insgesamt vorzugsweise sechs, sieben, acht oder neun Vorwärtsgangstufen auf sowie vorzugsweise wenigstens eine Rückwärtsgangstufe.

Die hohe Gangstufe ist in einer Ausführungsform eine zu der niedrigen Gangstufe benachbarte Gangstufe, also bspw. die Gangstufe 3, wenn die niedrige Gangstufe die Gangstufe 2 ist. Bevorzugt ist es jedoch, wenn die hohe Gangstufe drei oder fünf Gangstufen höher ist als die niedrige Gangstufe, also bspw. die Gangstufe 5 oder die Gangstufe 7, wenn die niedrige Gangstufe die Gangstufe 2 ist.

Die dem ersten Teilgetriebe zugeordnete Reibkupplung wird in dem Schritt c) erneut schlupfend geschlossen. Das hierbei von dieser Reibkupplung übertragbare Drehmoment kann dabei auf einen Drehmomentwert eingestellt werden, der kleiner/gleich einem Solldrehmomentwert ist. Der Solldrehmomentwert ist vorzugsweise jener Wert, der von einer übergeordneten Steuerung als vom Fahrer gewünschtes Drehmoment angesehen wird. Mit anderen Worten wird aus einer Betätigung des Fahrzeugs durch einen Fahrer abgeleitet, wie hoch das von dem Fahrer gewünschte Drehmoment ist (bspw. das Maß des Niederdrückens eines Gaspedals).

Folglich kann bereits über die hohe Gangstufe während des schlupfenden Schließens der dem anderen Teilgetriebe zugeordneten Reibkupplung ein gewünschter Drehmomentwert auf den Abtrieb übertragen werden.

Ferner ist es insgesamt vorteilhaft, wenn die Drehzahl des Verbrennungsmotors ab dem Schritt a) aktiv erhöht wird.

Unter einem aktiven Erhöhen wird insbesondere verstanden, dass der Verbrennungsmotor gestartet ist und aktiv durch Versorgung mit Brennstoff bzw. Kraftstoff dazu gebracht wird, seine Drehzahl zu erhöhen.

Hierzu ist es von Vorteil, dass eine Ausgangsdrehzahl in dem Schritt a) größer ist als Null.

Wie oben erwähnt, ist vor dem Schritt a) die Drehzahl des Verbrennungsmotors Null, wobei der Verbrennungsmotor abgeschaltet ist.

In dem Schritt a) ist die Ausgangsdrehzahl jedoch vorzugsweise größer als Null, und ist bspw. eine Drehzahl, die einer Zünddrehzahl entspricht, also eine Drehzahl, ab der der Verbrennungsmotor selbsttätig alleine durch Brennstoffzufuhr laufen kann.

Ferner ist es insgesamt vorteilhaft, dass die Drehzahl des Verbrennungsmotors vor dem Schritt a) auf passive Art und Weise von Null auf eine Ausgangsdrehzahl erhöht wird, die größer ist als Null.

Die passive Drehzahlerhöhung wird durch Schließen einer der Reibkupplungen erreicht.

In der erfindungsgemäßen Ausführungsform erfolgt die passive Drehzahlerhöhung des Verbrennungsmotors vor dem Schritt a), indem die dem ersten Teilgetriebe zugeordnete Reibkupplung schlupfend geschlossen wird.

Hierbei wird die Trägheitsenergie des Fahrzeuges genutzt, das bei dem Fahren mit der Geschwindigkeit größer Null und bei einem in dem anderen Teilgetriebe eingelegten Gang eine entsprechende Drehzahl auf den Verbrennungsmotor übertragen kann, um diesen zu starten. Es versteht sich, dass die in dem anderen Teilgetriebe ausgewählte Gangstufe hierbei eine solche Gangstufe ist, die hinreichend ist, um den Verbrennungsmotor auf seine Zünddrehzahl hochzudrehen. Ab dieser Drehzahl kann dann eine Brennstoffzufuhr zu dem Verbrennungsmotor erfolgen und dieser kann im Anschluss aktiv im Schritt a) seine Drehzahl selbsttätig erhöhen.

Der Antriebsstrang ist ein Hybrid-Antriebsstrang, der eine elektrische Maschine aufweist, die an ein Ausgangsglied der zweiten Reibkupplung gekoppelt ist.

Die elektrische Maschine ist dabei als elektrische Antriebsmaschine ausgebildet, die Antriebsleistung zum Antreiben des Kraftfahrzeuges bereitstellen kann.

Hybrid-Antriebsstränge mit Doppelkupplungsgetrieben können eine elektrische Maschine aufweisen, die mit einem Eingangsglied der zwei Reibkupplungen verbunden ist. Bevorzugt ist jedoch die vorliegende Variante, bei der die elektrische Maschine, die als Antriebseinheit dient, an ein Ausgangsglied der zweiten Reibkupplung gekoppelt ist.

Mit einem derartigen Hybrid-Antriebsstrang sind eine Vielzahl von Betriebsweisen realisierbar. Zum einen ist ein rein verbrennungsmotorischer Betrieb möglich, bei dem das Doppelkupplungsgetriebe in an sich bekannter, oben beschriebener Art und Weise betrieben wird. Dabei kann ggf. zusätzliche Antriebsleistung mittels der elektrischen Maschine bereitgestellt werden (sogenannter Boost-Betrieb). Ferner ist ein rein elektromotorischer Betrieb möglich. Hierbei wird die zweite Reibkupplung geöffnet und elektrische Antriebsleistung wird über das zweite Teilgetriebe auf den Abtrieb geleitet. Zudem ermöglicht ein derartiger Antriebsstrang ein Starten des Verbrennungsmotors mittels der elektrischen Maschine im Stand, wozu die zweite Reibkupplung geschlossen wird, die erste Reibkupplung geöffnet wird und in dem zweiten Teilgetriebe eine Neutralstellung hergestellt wird, also keine Gangstufe eingelegt ist. In manchen Situationen ist auch ein sogenanntes Standladen möglich, bei dem während des Stillstands des Fahrzeugs bei Neutralstellung in dem zweiten Teilgetriebe Antriebsleistung der ersten Antriebseinheit über die zweite Reibkupplung zu der zweiten Antriebseinheit geführt wird, um über die zweite Antriebseinheit, die in diesem Fall als elektrischer Generator arbeitet, Ladeleistung hin zu einer Batterie zu übertragen.

Bei einem rein elektrischen Fahrbetrieb können sämtliche Gangstufen des zweiten Teilgetriebes verwendet werden. In der Regel ist hierbei jedoch ein Gangwechsel mit einer Zugkraftunterbrechung verbunden, da die zweite Reibkupplung im rein elektrischen Fahrbetrieb in der Regel geöffnet ist, um den Verbrennungsmotor nicht mitschleppen zu müssen.

Ferner versteht sich bei einem derartigen Hybrid-Antriebsstrang, dass auch eine rekuperierende Betriebsweise möglich ist, bei der im Schubbetrieb die elektrische Maschine (zweite Antriebseinheit) als Generator arbeitet, wobei in dem zweiten Teilgetriebe eine geeignete Gangstufe geschaltet ist und wobei die zweite Reibkupplung vorzugsweise geöffnet ist.

Ein Hybrid-Antriebsstrang der oben bezeichneten Art ist bspw. bekannt aus dem Dokument DE 10 2012 018 416 B4. Hier ist ein Verfahren offenbart, bei dem während eines rein elektrischen Fahrbetriebes ein Gangwechsel erfolgt, wobei ein Füllmoment in Form eines Zugkraftünterstützungsmomentes bereitgestellt wird. Das Füllmoment wird aus der Schwungenergie des zuvor angeschleppten, nicht gezündeten Verbrennungsmotors bereitgestellt, der mittels eines elektrischen Anlassermotors angeschleppt worden ist.

Das Dokument DE 10 2013 002 330 A1 offenbart ein weiteres Verfahren zum Betreiben eines solchen Hybrid-Antriebsstranges, wobei ermöglicht wird, eine Quellgangstufe in dem der elektrischen Maschine zugeordneten Teilgetriebe auszulegen, um dann ggf. eine Zielgangstufe schnell einzulegen. Durch das dort offenbarte Verfahren soll erreicht werden, dass das Teilgetriebe zum Auslegen der Quellgangstufe nicht dadurch lastfrei gestellt wird, dass das Moment der elektrischen Maschine abgesenkt wird, sondern dadurch, dass die diesem Teilgetriebe zugeordnete Reibkupplung zumindest teilweise geschlossen wird. Hierdurch soll es möglich sein, für einen längeren Zeitraum ein gewisses Unterstützungsmoment bereitzustellen.

Schließlich offenbart das Dokument DE 10 2010 044 618 B4 ein Verfahren zum Ansteuern eines derartigen Hybrid-Antriebsstranges.

Hybrid-Antriebsstränge der oben bezeichneten Art unterstützen eine Vielzahl von Betriebsmodi, bei denen der Verbrennungsmotor abgeschaltet ist oder im Leerlauf läuft. Diese Betriebsmodi sind bspw. ein elektrisches Fahren, ein sog. Segeln ("sailing"), ein sog. "extended sailing", etc. Diese Betriebsmodi bedingen, dass Übergänge zwischen einem normalen Fahrbetrieb (unter Verwendung des Verbrennungsmotors) und diesen anderen Betriebsmodi durchzuführen sind. Hierbei ist der Verbrennungsmotor häufig anzuhalten und wieder zu starten bzw. zu zünden. Teilweise wird der Verbrennungsmotor abgekoppelt und dann wieder angekoppelt.

Beim Ankoppeln wird der Verbrennungsmotor zunächst auf eine Zieldrehzahl gebracht wird, bevor ein Drehmoment auf ein Anfahrelement übertragen werden kann.

Die elektrische Maschine dient, wie gesagt, zum Bereitstellen von Antriebsleistung, wobei der Antriebsstrang in manchen Fällen einen elektrischen Anlassermotor aufweisen kann.

Bei dem erfindungsgemäßen Verfahren wird die elektrische Antriebsmaschine bereits ab dem Schritt a) dazu verwendet, um Antriebsleistung auf den Abtrieb zu führen, und zwar noch während der Verbrennungsmotor passiv auf eine Zünddrehzahl hochgedreht wird.

In dem einen Teilgetriebe, an das die elektrische Maschine angeschlossen ist, also das zweite Teilgetriebe, kann dabei bspw. bereits die niedrige Zielgangstufe eingelegt sein. Alternativ kann in dem einen Teilgetriebe auch eine höhere Gangstufe eingelegt sein, bei der es sich um eine Gangstufe handelt, die höher oder niedriger sein kann als die hohe Gangstufe in dem anderen Teilgetriebe gemäß Schritt b).

Die Drehzahl der elektrischen Maschine wird dabei an die Geschwindigkeit des Fahrzeugs angepasst, in Abhängigkeit von der in dem einen Teilgetriebe eingelegten Gangstufe.

Gemäß der Erfindung überträgt die elektrische Maschine für den Zeitraum, innerhalb dessen die Drehzahl des Verbrennungsmotors vor dem Schritt a) auf passive Art und Weise erhöht wird, indem die dem anderen Teilgetriebe zugeordnete Reibkupplung schlupfend geschlossen wird, ein Antriebsmoment über das zweite Teilgetriebe auf den Abtrieb.

Dabei kann das von der elektrischen Maschine innerhalb dieses Zeitraumes bereitgestellte Drehmoment etwas größer gewählt werden als ein Drehmoment, das im Anschluss von der elektrischen Maschine bereitgestellt wird. Das Maß, um das das Drehmoment der elektrischen Maschine für diesen Zeitraum größer gewählt wird, entspricht dabei vorzugsweise jener Drehmomentreduktion, die durch das passive Anschleppen des Verbrennungsmotors hervorgerufen wird.

Hierdurch kann der Komfort des Betriebs des Antriebsstranges erhöht werden, da der Fahrer das Starten des Verbrennungsmotors auf passive Art und Weise durch schlupfendes Betätigen der dem anderen Teilgetriebe zugeordneten Reibkupplung nicht spürt.

Dieser "Drehmomentüberschuss" ist vorzugsweise dann nicht erforderlich, wenn der Verbrennungsmotor passiv mittels eines separaten Anlassermotors auf eine Zünddrehzahl hochgedreht wird.

Bei dem erfindungsgemäßen Verfahren ist es bevorzugt, wenn die dem einen Teilgetriebe zugeordnete Reibkupplung nach dem Schritt d) vollständig geschlossen ist, um im Anschluss an den Schritt d) Antriebsleistung des Verbrennungsmotors über die niedrige Gangstufe auf den Abtrieb führen zu können, sei es mit oder ohne Unterstützung durch eine elektrische Maschine.

Ferner versteht sich, dass mit dem Schritt d) die dem anderen Teilgetriebe zugeordnete Reibkupplung vollständig geöffnet wird.

Ferner ist es insgesamt vorteilhaft, dass beim passiven Erhöhen der Drehzahl des Verbrennungsmotors vor dem Schritt a) eine Zeitspanne größer Null zwischen dem Öffnen der dem anderen Teilgetriebe zugeordneten Reibkupplung (nach dem Anschlupfen des Verbrennungsmotors) und dem erneuten schlupfenden Schließen dieser Reibkupplung im Schritt c) liegt. In dem Zeitraum vor dem Schritt a) wird nämlich ein Drehmoment von dem Abtrieb in Richtung hin zu dem Verbrennungsmotor übertragen. In dem Schritt c) wird hingegen Abtriebsmoment von dem Verbrennungsmotor hin zu dem Abtrieb übertragen. Die dazwischen liegende Zeitspanne liegt vorzugsweise in einem Bereich zwischen 0,01 s und 0,5 s, vorzugsweise in einem Bereich zwischen 0,15 s und 0,35 s, und besonders bevorzugt in einem Bereich zwischen 0,2 s und 0,3 s.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Es zeigen:
- Fig. 1: eine schematische Darstellung eines Hybrid-Antriebsstranges;
- Fig. 2: ein Zeitablaufdiagramm von Drehzahlen in dem Hybrid-Antriebsstrang der Fig. 1 bei Durchführung einer Ausführungsform des erfindungsgemäßen Verfahrens;
- Fig. 3: ein Zeitablaufdiagramm von Drehmomenten in dem Hybrid-Antriebsstrang der Fig. 1 bei Durchführung einer Ausführungsform des erfindungsgemäßen Verfahrens; und
- Fig. 4: ein Zeitablaufdiagramm von Drehmomenten in dem Hybrid-Antriebsstrang der Fig. 1 bei Durchführung einer weiteren Ausführungsform des erfindungsgemäßen Verfahrens.

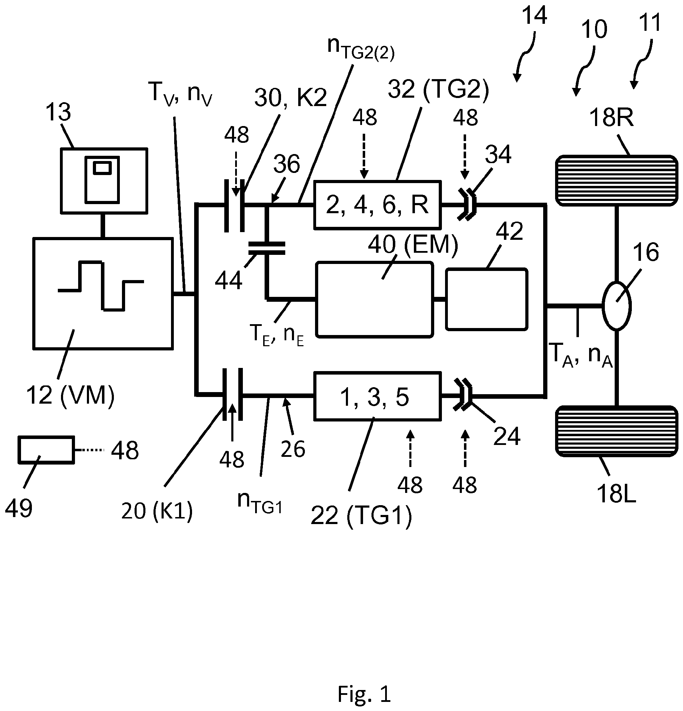

In Fig. 1 ist in schematischer Form ein Hybrid-Antriebsstrang 10 für ein schematisch angedeutetes Kraftfahrzeug 11 dargestellt. Der Hybrid-Antriebsstrang 10 beinhaltet eine erste Antriebseinheit 12 in Form eines Verbrennungsmotors, der an einen Tank 13 angeschlossen ist. Ferner weist der Hybrid-Antriebsstrang ein Doppelkupplungsgetriebe 14 auf. Antriebsleistung der ersten Antriebseinheit 12 kann über das Doppelkupplungsgetriebe 14 hin zu einem Abtrieb in Form eines Differentials 16 übertragen werden. Das Differential 16 dient dazu, Antriebsleistung auf angetriebene Räder 18L, 18R des Kraftfahrzeuges 11 zu verteilen.

Das Doppelkupplungsgetriebe 14 weist eine erste Reibkupplung 20 (K1) auf, deren Eingangsglied mit der ersten Antriebseinheit 12 drehgekoppelt ist. Ein Ausgangsglied der ersten Reibkupplung 20 ist mit einem Eingang eines ersten Teilgetriebes 22 (TG1) verbunden, das ungerade Vorwärtsgangstufen des Doppelkupplungsgetriebes beinhaltet. Das erste Teilgetriebe 22 weist eine Mehrzahl von Schaltkupplungen zum Ein- und Auslegen dieser Gangstufen auf, von denen eine in Fig. 1 schematisch bei 24 dargestellt ist. Ein Ausgang des ersten Teilgetriebes 22 ist mit dem Differential 16 verbunden. Die erste Reibkupplung 20 und das erste Teilgetriebe 22 bilden einen ersten Leistungsübertragungspfad 26.

Das Doppelkupplungsgetriebe 14 weist ferner eine zweite Reibkupplung 30 (K2) auf, deren Eingangsglied ebenfalls mit der ersten Antriebseinheit 12 drehgekoppelt ist. Ein Ausgangsglied der zweiten Reibkupplung 30 ist mit einem Eingang eines zweiten Teilgetriebes 32 verbunden, das den geraden Vorwärtsgangstufen des Doppelkupplungsgetriebes 14 zugeordnet ist, vorliegend auch einer Rückwärtsgangstufe R.

Das zweite Teilgetriebe 32 weist eine Mehrzahl von Schaltkupplungen zum Ein- und Auslegen dieser Gangstufen auf, von denen eine in Fig. 1 schematisch bei 34 angedeutet ist. Die zweite Reibkupplung 30 und das zweite Teilgetriebe 32 bilden einen zweiten Leistungsübertragungspfad 36 des Doppelkupplungsgetriebes 14.

Der Hybrid-Antriebsstrang beinhaltet ferner optional eine zweite Antriebseinheit in Form einer elektrischen Maschine 40. Die elektrische Maschine 40 ist mit einer Batterie 42 verbunden, aus der elektrische Leistung zum Bereitstellen von Antriebsleistung entnommen werden kann (im Motorbetrieb der elektrischen Maschine 40), und in die in einem Generatormodus der elektrischen Maschine 40 elektrische Leistung eingespeist werden kann.

Die elektrische Maschine 40 ist mit dem Ausgangsglied der zweiten Reibkupplung 30 bzw. einem Eingang des zweiten Teilgetriebes 32 gekoppelt. Dies kann eine feste Drehkopplung sein, kann jedoch auch eine Kopplung über eine Maschinenkupplung 44 sein, wie es in Fig. 1 schematisch angedeutet ist.

Der Hybrid-Antriebsstrang 10 ist vorzugsweise dazu ausgelegt, dass der Verbrennungsmotor 12 mittels der elektrischen Maschine 40 gestartet werden kann. Hierzu werden die Schaltkupplungen 34 geöffnet, die zweite Reibkupplung 30 wird geschlossen und die erste Reibkupplung 20 wird geöffnet. Zusätzlich hierzu ist es jedoch auch möglich, für das Anlassen des Verbrennungsmotors 12 einen separaten elektrischen Anlassermotor bereitzustellen.

Zum Betätigen der unterschiedlichen Komponenten des Hybrid-Antriebsstranges ist in schematischer Form eine Aktuatorik 48 vorgesehen, die mittels einer ebenfalls schematisch angedeuteten Steuereinrichtung 49 angesteuert wird. Die Aktuatorik 48 kann zumindest teilweise hydraulisch und/oder zumindest teilweise elektrisch ausgeführt sein.

Der Hybrid-Antriebsstrang 10 ermöglicht einen rein verbrennungsmotorischen Fahrbetrieb, bei dem Gangwechsel ohne Zugkraftunterbrechung durch überschneidende Betätigung der zwei Reibkupplungen 20, 30 erfolgen können. Ferner ermöglicht der Hybrid-Antriebsstrang 10 einen rein elektromotorischen Fahrbetrieb, bei dem die zweite Reibkupplung 30 geöffnet ist und der Verbrennungsmotor 12 stillsteht. Die erste Reibkupplung 20 ist in diesem Fall vorzugsweise ebenfalls geöffnet. Gangwechsel in dem rein elektromotorischen Fahrbetrieb können durch Gangwechsel in dem zweiten Teilgetriebe 32 erfolgen.

Ferner ist ein Boost-Fahrbetrieb möglich. Hierbei wird Antriebsleistung von der ersten Antriebseinheit 12 bereitgestellt und über die erste Reibkupplung 20, die zu diesem Zweck geschlossen ist, und das erste Teilgetriebe 22 auf den Abtrieb bzw. das Differential 16 übertragen. Parallel hierzu wird Antriebsleistung der zweiten Antriebseinheit 40 über das zweite Teilgetriebe 32 auf den Abtrieb bzw. das Differential 16 übertragen. Die zweite Reibkupplung 30 ist in diesem Fall vorzugsweise geöffnet. Die Antriebsleistungen des Verbrennungsmotors 12 und der elektrischen Maschine 40 summieren sich am Ausgang des Doppelkupplungsgetriebes 14 und werden als summierte Antriebsleistung auf den Abtrieb geführt.

Es versteht sich, dass mit dem Hybrid-Antriebsstrang 10 auch ein Rekuperieren möglich ist, sowie ein Standladen und ein Anlassen des Verbrennungsmotors mittels der elektrischen Maschine 40.

Ein Hybrid-Antriebsstrang 10 der oben bezeichneten Art ist generell bekannt aus dem Dokument DE 10 2012 018 416 A1, auf dessen Inhalt vorliegend vollumfänglich Bezug genommen wird.

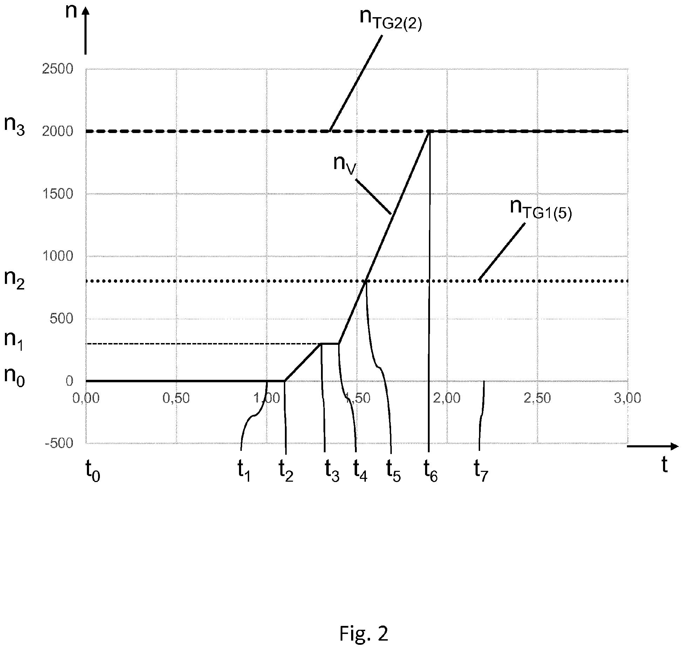

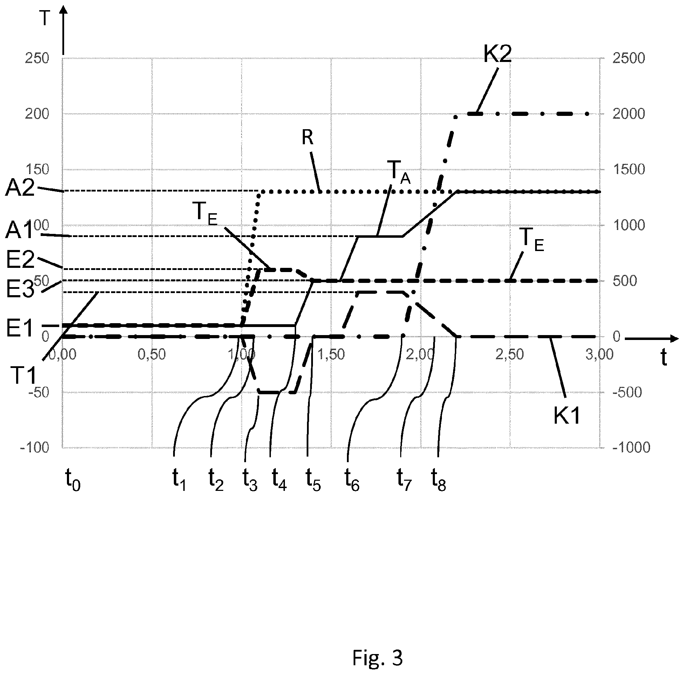

In den Figuren 2 und 3 ist eine erste Ausführungsform eines erfindungsgemäßen Verfahrens unter Verwendung des Hybrid-Antriebsstranges 10 der Fig. 1 dargestellt. Die Figuren. 2 und 3 stellen jeweils Zeitablaufdiagramme dar, und zwar von einer Drehzahl n über der Zeit t bzw. von einem Drehmoment T über der Zeit t.

In den Figuren. 2 und 3 haben die dort verwendeten Bezugszeichen die folgenden Bedeutungen:
- nv: Drehzahl des Verbrennungsmotors,
- n_{TG1(5)}: Drehzahl am Eingang des ersten Teilgetriebes bei eingelegter Verbrennergangstufe 5,
- n_{TG2(2)}: Drehzahl am Eingang des zweiten Teilgetriebes bei eingelegter Elektrogangstufe 2,
- n₀: Drehzahl 0,
- n₁: Zwischendrehzahl,
- n₂: Drehzahlwert von n_{TG1(5)},
- n₃: Drehzahlwert von n_{TG2(2)} (Zieldrehzahl),
- T_{E}: Drehmoment der elektrischen Maschine,
- T_{A}: Drehmoment am Abtrieb,
- R: Drehmomentanforderung des Fahrers,
- K1: Drehmoment an der ersten Reibkupplung,
- K2: Drehmoment an der zweiten Reibkupplung,
- E1: erster Elektro-Drehmomentwert von T_{E},
- E2: zweiter Elektro-Drehmomentwert von T_{E},
- E3: dritter Elektro-Drehmomentwert von T_{E},
- T1: Drehmoment der ersten Reibkupplung K1 in einer Betriebsphase c),
- A1: Zwischendrehmomentwert von T_{A},
- A2: End-Drehmomentwert von T_{A}.

Das Verfahren gemäß den Figuren 2 und 3 geht aus von einem Zustand t₀), bei dem das Kraftfahrzeug eine Geschwindigkeit größer Null hat und bei dem beide Reibkupplungen 20, 30 geöffnet sind (K1 = 0, K2 = 0). Der Verbrennungsmotor ist abgeschaltet, wie es zum Zeitpunkt t₀ in Fig. 2 bei n_{V} zu sehen ist. In dem ersten Teilgetriebe 22 ist die Vorwärtsgangstufe 5, also eine hohe Gangstufe, eingelegt. In dem zweiten Teilgetriebe 32 ist eine niedrige Gangstufe eingelegt, nämlich die Vorwärtsgangstufe 2. Entsprechend ist die Drehzahl am Eingang des ersten Teilgetriebes 22 in Fig. 2 bei to mit n₂ gezeigt, ein Wert, der kleiner ist als Wert n₃, den in diesem Zustand der Eingang des zweiten Teilgetriebes 32 hat.

Ein von der elektrischen Maschine 40 bereitgestelltes Drehmoment T_{E} kann bei t₀ ebenfalls Null sein (K = 0). Das Drehmoment T_{E} kann jedoch, bspw. bei einem Segelbetrieb, auch sehr klein sein. In diesem Fall dient die Antriebsleistung der elektrischen Maschine vorzugsweise nur dazu, einen Rollwiderstand und einen Luftwiderstand zu überwinden, also eine Geschwindigkeit im Wesentlichen konstant zu halten, während der Verbrennungsmotor 12 abgeschaltet ist.

Nach Empfang eines Fahrerwunsches R zu einem Zeitpunkt t₁ wird als erstes die erste Reibkupplung 20 teilweise geschlossen (K1 wird kleiner Null), derart, dass zu einem Zeitpunkt t₂ (siehe Fig. 2) die Drehzahl nv ansteigt, der Verbrennungsmotor 12 also angeschleppt wird. Bei einem herkömmlichen Antriebsstrang ohne elektrische Maschine 14 wird diese Maßnahme zu einer gewissen Verzögerung führen, die der zum Anschleppen des Verbrennungsmotors erforderlichen Energie entspricht.

Bei einem Hybrid-Antriebsstrang wird gleichzeitig zum Zeitpunkt t₁ das Drehmoment T_{E} der elektrischen Maschine erhöht werden, wie es in Fig. 3 dargestellt ist. Dies kann ausgehend von einem Drehmomentwert T_{E} = E1 auf einen Wert E2 erfolgen, der so bemessen ist, dass die zum Anschleppen des Verbrennungsmotors notwendige Energie kompensiert wird, der Fahrer also keine Verzögerung des Fahrzeugs erfährt. T_{A} bleibt dabei noch bei Null.

Wie gesagt, bewirkt zum Zeitpunkt t₂ das teilweise Schließen der ersten Reibkupplung 20, dass der Verbrennungsmotor angeschleppt wird, und die Drehzahl n_{V} erhöht, und zwar bis zum Zeitpunkt t₃, bei dem die Drehzahl n_{V} einen Wert n₁ erreicht hat. Der Wert von n₁ entspricht einer Zünddrehzahl, also einer Drehzahl des Verbrennungsmotors, ab der dieser bei Kraftstoffzufuhr selbsttätig lauffähig ist.

Folglich wird unmittelbar nach dem Zeitpunkt t₃ die erste Reibkupplung 20 wieder geschlossen, derart, dass diese zum Zeitpunkt t₄ vollständig geschlossen ist (K1 = 0). Der Verbrennungsmotor 12 bleibt in diesem Zeitraum von t₃ bis t₄ etwa auf der Drehzahl n₁ und wird gezündet. Ab dem Zeitpunkt t₄ wird die Drehzahl n_{V} des Verbrennungsmotors 12 aktiv, d.h. durch Brennstoffzufuhr, erhöht, in Richtung hin zu einer Zieldrehzahl n₃, die der Drehzahl am Eingang des zweiten Teilgetriebes 32 entspricht.

Herkömmlicherweise wäre vom Zeitpunkt t₄ bis zum Zeitpunkt t₆, bei dem der Verbrennungsmotor diese Drehzahl n₃ erreicht hat, keine Übertragung von Drehmoment möglich. Andererseits hat der Fahrer ja bereits zum Zeitpunkt t₁ einen Drehmomentwunsch R abgegeben.

Bei dem in den Figuren 2 und 3 beschriebenen Verfahren wird zum Zeitpunkt t₅, der um eine Zeitspanne größer Null versetzt ist zu dem Zeitpunkt t₄, die erste Reibkupplung 20 wieder geschlossen. In diesem Fall wird ein Drehmoment mit einem anderen (positiven) Vorzeichen übertragen, nämlich von dem Verbrennungsmotor 12 über die erste Reibkupplung 20 und über das erste Teilgetriebe 22, in welchem die Gangstufe 5 eingelegt ist, hin zu dem Abtrieb 16. Die erste Kupplung 20 wird dabei ab dem Zeitpunkt t₅ schlupfend geschlossen. Der Zeitpunkt t₅ ist jener Zeitpunkt, zu dem die Drehzahl n_{V} des Verbrennungsmotors 12 eine Drehzahl n₂ erreicht hat, die am Eingang des ersten Teilgetriebes 22 vorliegt.

Folglich kann ab dem Zeitpunkt t₅ Drehmoment des Verbrennungsmotors 12 über die erste Reibkupplung 20 und das erste Teilgetriebe 22 hin zu dem Abtrieb 16 übertragen werden, wie es durch einen Anstieg des Drehmomentes T_{A} auf einen Wert A1 in Fig. 3 zu erkennen ist. Der Wert A₁ ist kleiner als der Wert von R, so dass das angeforderte Drehmoment ab dem Zeitpunkt t₅ noch nicht vollständig bereitgestellt werden kann.

In Fig. 3 ist zudem gezeigt, dass vom Zeitpunkt t₃ an das Drehmoment T_{E} bis zum Zeitpunkt t₄ vom Wert E2 auf einen Wert E3 abgesenkt wird, der einem Grunddrehmoment entspricht, das aufgrund des Fahrerwunsches R von der elektrischen Maschine bereitgestellt wird. Der von dem Verbrennungsmotor 12 bereitgestellte Drehmomentbetrag ergibt sich folglich durch die Differenz von A1 - E3.

Ab dem Zeitpunkt t₆ hat, wie es in Fig. 2 gezeigt ist, der Verbrennungsmotor nv die Zieldrehzahl n₃ erreicht, so dass dann eine überschneidende Betätigung der zwei Reibkupplungen 20, 30 erfolgt. Die erste Reibkupplung 20 wird wieder geöffnet. Die zweite Reibkupplung 30 wird überschneidend hierzu bis zu einem Zeitpunkt t₇ geschlossen, so dass ab diesem Zeitpunkt Antriebsleistung des Verbrennungsmotors 12 über die geschlossene zweite Reibkupplung 30 und das zweite Teilgetriebe 32 (in welchem die Vorwärtsgangstufe 2 eingelegt ist) auf den Abtrieb übertragen wird, und zwar so, dass T_{A} = R wird.

Bei t₈ ist der Zustand gezeigt, bei dem die erste Reibkupplung 20 vollständig geöffnet ist und bei dem die zweite Reibkupplung 30 vollständig geschlossen ist.

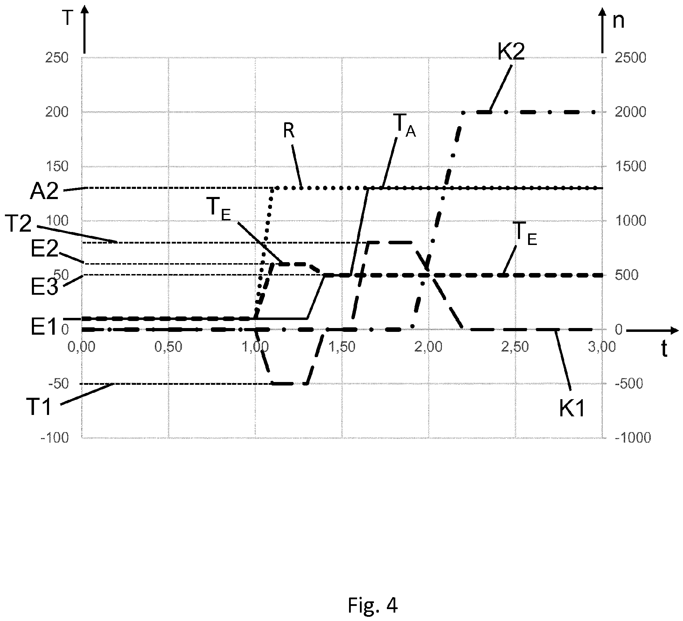

In Fig. 4 ist eine Abwandlung der Ausführungsform der Figuren 2 und 3 dargestellt.

Der Ablauf ist dabei vom Zeitpunkt to bis zum Zeitpunkt t₅ identisch. Zum Zeitpunkt t₅ wird jedoch die erste Reibkupplung 20 stärker schlupfend geschlossen, so dass die erste Reibkupplung 20 ein größeres Drehmoment übertragen kann. Folglich kann ab dem Zeitpunkt t₅ bereits am Abtrieb ein Drehmoment T_{A} = A2 bereitgestellt werden, das dem Fahrerwunsch R vollständig entspricht.

Zum Zeitpunkt t₇' ist in diesem Fall wiederum ein vollständiges Öffnen der ersten Kupplung 20 und ein vollständiges Schließen der zweiten Reibkupplung 30 erreicht, so dass nun, wie im Fall der Figuren 2 und 3 der Antriebsstrang Antriebsleistung von dem Verbrennungsmotor 12 über die zweite Reibkupplung 20 und das zweite Teilgetriebe (in welchem die Vorwärtsgangstufe 2 eingelegt ist) auf den Abtrieb 16 übertragen kann.

Es versteht sich, dass bei beiden Verfahren (Fig. 3 und Fig. 4) ab dem Zeitpunkt t₇ bzw. t_{7'} in dem ersten Teilgetriebe 20 eine andere Gangstufe eingelegt werden kann, bspw. eine an die Vorwärtsgangstufe 2 anschließende Gangstufe, nämlich die Gangstufe 3. In diesem Fall kann anschließend ein herkömmlicher Gangwechsel mittels des Doppelkupplungsgetriebes erfolgen, indem die Kupplungen 20 und 30 wiederum überschneidend betätigt werden, um von der Gangstufe 2 den Kraftfluss umzulenken auf die Vorwärtsgangstufe 3.

## Patentansprüche

1. Verfahren zum Betreiben eines Antriebsstranges (10) eines Kraftfahrzeuges (11), wobei der Antriebsstrang (10) einen Verbrennungsmotor (12) und ein Doppelkupplungsgetriebe (14) aufweist, wobei das Doppelkupplungsgetriebe (14) einen ersten Leistungsübertragungspfad (26) mit einer ersten Reibkupplung (20) und einem ersten Teilgetriebe (22) mit ungeraden Gangstufen sowie einen zweiten Leistungsübertragungspfad (36) mit einer zweiten Reibkupplung (30) und einem zweiten Teilgetriebe (32) mit geraden Gangstufen aufweist, und wobei der Verbrennungsmotor (12) an ein Eingangsglied der ersten Reibkupplung (20) und an ein Eingangsglied der zweiten Reibkupplung (30) gekoppelt ist, wobei der Antriebsstrang (10) ein Hybrid-Antriebsstrang (10) ist, der eine elektrische Maschine (40) aufweist, die an ein Ausgangsglied der zweiten Reibkupplung (30) gekoppelt ist,
wobei das Verfahren dazu dient, ausgehend von einem Zustand, bei dem der Verbrennungsmotor abgeschaltet und somit die Drehzahl des Verbrennungsmotors Null ist, ferner das Kraftfahrzeug eine Geschwindigkeit größer Null hat und bei dem beide Reibkupplungen (20, 30) geöffnet sind, Antriebsleistung des Verbrennungsmotors (12) über eine niedrige Gangstufe (2) im zweiten Teilgetriebe (32) auf einen Abtrieb (16) zu führen,
wobei hierfür die Drehzahl (nᵥ) des Verbrennungsmotors (12) vor dem Schritt a) auf passive Art und Weise von Null auf eine Ausgangsdrehzahl (n₁) erhöht wird, die größer ist als Null, indem die dem ersten Teilgetriebe (22) zugeordnete Reibkupplung (20) schlupfend geschlossen wird, wobei die in dem ersten Teilgetriebe ausgewählte Gangstufe hierbei eine solche Gangstufe ist, die hinreichend ist, um den Verbrennungsmotor auf seine Zünddrehzahl hochzudrehen, wobei ferner der Antriebstrang so betrieben wird, dass die elektrische Maschine (40) für den Zeitraum, innerhalb dessen die Drehzahl (nv) des Verbrennungsmotors (12) vor dem Schritt a) auf passive Art und Weise von Null auf die Ausgangsdrehzahl (ni) erhöht wird, ein Antriebsmoment (TE) über das zweite Teilgetriebe (32) auf besgaten Abtrieb (16) überträgt, und mit den sich daran anschließenden Schritten:
a) Erhöhen der Drehzahl (nᵥ) des Verbrennungsmotors (12), ausgehend von besagter Ausgangsdrehzahl,
b) Einlegen der niedrigen Gangstufe (2) im zweiten Teilgetriebe (32) und Einlegen einer hohen Gangstufe (5) im ersten Teilgetriebe (22), falls noch nicht erfolgt,
c) erneutes schlupfendes Schließen der dem ersten Teilgetriebe (22) zugeordneten Reibkupplung (20), sobald die Drehzahl (nᵥ) des Verbrennungsmotors (12) eine Zwischendrehzahl (n₂) erreicht hat, die der hohen Gangstufe (5)im ersten Teilgetriebe (22) entspricht, um Antriebsleistung über die hohe Gangstufe (5) auf den Abtrieb zu führen, und
d) überschneidendes Schließen der dem zweiten Teilgetriebe (32) zugeordneten Reibkupplung (30) und Öffnen der dem ersten Teilgetriebe (22) zugeordneten Reibkupplung (20), um Antriebsleistung über die niedrige Gangstufe (2) auf den Abtrieb zu führen, sobald die Drehzahl (nᵥ) des Verbrennungsmotors (12) eine Zieldrehzahl (n₃) erreicht hat, die der niedrigen Gangstufe (2) im zweiten Teilgetriebe (32) entspricht.

2. Antriebsstrang (10) eines Kraftfahrzeuges (11), wobei der Antriebsstrang (10) einen Verbrennungsmotor (12), eine elektrische Maschine (40) und ein Doppelkupplungsgetriebe (14) aufweist, wobei das Doppelkupplungsgetriebe (14) einen ersten Leistungsübertragungspfad (26) mit einer ersten Reibkupplung (20) und einem ersten Teilgetriebe (22) mit ungeraden Gangstufen sowie einen zweiten Leistungsübertragungspfad (36) mit einer zweiten Reibkupplung (30) und einem zweiten Teilgetriebe (32) mit geraden Gangstufenaufweist, und wobei der Verbrennungsmotor (12) an ein Eingangsglied der ersten Reibkupplung (20) und an ein Eingangsglied der zweiten Reibkupplung (30) gekoppelt ist, und wobei Antriebsstrang ein Hybrid-Antriebsstrang (10) ist, der einen elektrische Maschine (40) aufweist, die an ein Ausgangsglied der zweiten Reibkupplung (30) gekoppelt ist,
wobei der Antriebsstrang (10) eine Steuereinrichtung (49) aufweist, die dazu ausgebildet und dazu eingerichtet ist, ein Verfahren nach Anspruch 1 durchzuführen.

## Claims

1. Method for operating a drive train (10) of a motor vehicle (11), the drive train (10) having an internal combustion engine (12) and a double clutch transmission (14), the double clutch transmission (14) having a first power transmission path (26) with a first friction clutch (20) and a first sub-transmission (22) with odd gears stages and a second power transmission path (36) with a second friction clutch (30) and a second sub-transmission (32) with even gear stages, and the internal combustion engine (12) being coupled to an input member of the first friction clutch (20) and to an input member of the second friction clutch (30), the drive train (10) being a hybrid drive train (10) which has an electric machine (40) which is coupled to an output member of the second friction clutch (30), the method serving, starting from a state, in the case of which the internal combustion engine is switched off and therefore the rotational speed of the internal combustion engine is zero and, furthermore, the motor vehicle has a speed of greater than zero and in the case of which state the two friction clutches (20, 30) are open, to conduct drive power of the internal combustion engine (12) via a lower gear stage (2) in the second sub-transmission (32) to an output (16), the rotational speed (nᵥ) of the internal combustion engine (12) being increased for this purpose before step a) in a passive way from zero to an output rotational speed (n₁) which is greater than zero by the friction clutch (20) which is assigned to the first sub-transmission (22) being closed with slip, the gear stage which is selected in the first sub-transmission being a gear stage here which is sufficient to spin up the internal combustion engine to its ignition rotational speed, the drive train being operated, furthermore, in such a way that, for the time period, within which the rotational speed (nv) of the internal combustion engine (12) is increased to the output rotational speed (ni) in a passive way before step a), the electric machine (40) transmits a drive torque (TE) via the second sub-transmission (32) to the said output (16), and with the following steps:
a) increasing of the rotational speed (nᵥ) of the internal combustion engine (12), starting from the said output rotational speed,
b) engaging of the lower gear stage (2) in the second sub-transmission (32), and engaging of a high gear stage (5) in the first sub-transmission (22), if it has not yet taken place,
c) renewed closing with slip of the friction clutch (20) which is assigned to the first sub-transmission (22), as soon as the rotational speed (nᵥ) of the internal combustion engine (12) has reached an intermediate rotational speed (n₂) which corresponds to the high gear stage (5) in the first sub-transmission (22), in order to conduct drive power via the high gear stage (5) to the output, and
d) overlapping closing of the friction clutch (30) which is assigned to the second sub-transmission (32) and opening of the friction clutch (20) which is assigned to the first sub-transmission (22), in order to conduct drive power via the lower gear stage (2) to the output, as soon as the rotational speed (nᵥ) of the internal combustion engine (12) has reached a target rotational speed (n₃) which corresponds to the lower gear stage (2) in the second sub-transmission (32).

2. Drive train (10) of a motor vehicle (11), the drive train (10) having an internal combustion engine (12), an electric machine (40) and a double clutch transmission (14), the double clutch transmission (14) having a first power transmission path (26) with a first friction clutch (20) and a first sub-transmission (22) with odd gears stages and a second power transmission path (36) with a second friction clutch (30) and a second sub-transmission (32) with even gear stages, and the internal combustion engine (12) being coupled to an input member of the first friction clutch (20) and to an input member of the second friction clutch (30), and the drive train being a hybrid drive train (10) which has an electric machine (40) which is coupled to an output member of the second friction clutch (30),
the drive train (10) having a control device (49) which is configured and set up to carry out a method according to Claim 1.

## Revendications

1. Procédé permettant de faire fonctionner une chaîne cinématique (10) d'un véhicule automobile (11), la chaîne cinématique (10) présentant un moteur à combustion interne (12) et une transmission à double embrayage (14), la transmission à double embrayage (14) présentant un premier trajet de transmission de puissance (26) avec un premier embrayage à friction (20) et une première transmission partielle (22) ayant des rapports de vitesse impairs ainsi qu'un deuxième trajet de transmission de puissance (36) avec un deuxième embrayage à friction (30) et une deuxième transmission partielle (32) ayant des rapports de vitesse pairs, et le moteur à combustion interne (12) étant accouplé à un élément d'entrée du premier embrayage à friction (20) et à un élément d'entrée du deuxième embrayage à friction (30), la chaîne cinématique (10) étant une chaîne cinématique hybride (10) qui présente une machine électrique (40) qui est accouplée à un élément de sortie du deuxième embrayage à friction (30), le procédé servant, en partant d'un état dans lequel le moteur à combustion interne est coupé et la vitesse de rotation du moteur à combustion interne est donc égale à zéro, le véhicule automobile présentant en outre une vitesse supérieure à zéro, et dans lequel les deux embrayages à friction (20, 30) sont ouverts, à guider la puissance d'entraînement du moteur à combustion interne (12) par l'intermédiaire d'un rapport de vitesse bas (2) dans la deuxième transmission partielle (32) vers une sortie (16),
dans lequel, avant l'étape a), la vitesse de rotation (nᵥ) du moteur à combustion interne (12) est à cet effet augmentée de manière passive de zéro à une vitesse de rotation de départ (n₁) qui est supérieure à zéro en ce que l'embrayage à friction (20) associé à la première transmission partielle (22) est fermé par glissement, le rapport de vitesse sélectionné dans la première transmission partielle étant alors un rapport de vitesse qui est suffisant pour faire monter le moteur à combustion interne jusqu'à sa vitesse de rotation d'allumage, la chaîne cinématique fonctionnant en outre de telle sorte que pendant la période dans laquelle la vitesse de rotation (nᵥ) du moteur à combustion interne (12) est augmentée avant l'étape a) de manière passive de zéro à la vitesse de rotation de départ (n₁), la machine électrique (40) transmet un couple d'entraînement (TE) par l'intermédiaire de la deuxième transmission partielle (32) à ladite sortie (16), et comprenant les étapes consécutives consistant à :
a) augmenter la vitesse de rotation (nᵥ) du moteur à combustion interne (12), en partant de ladite vitesse de départ,
b) enclencher le rapport de vitesse bas (2) dans la deuxième transmission partielle (32) et enclencher un rapport de vitesse haut (5) dans la première transmission partielle (22), si ce n'est pas déjà fait,
c) refermer par glissement l'embrayage à friction (20) associé à la première transmission partielle (22) dès que la vitesse de rotation (nᵥ) du moteur à combustion interne (12) a atteint une vitesse de rotation intermédiaire (n₂) qui correspond au rapport de vitesse haut (5) dans la première transmission partielle (22) pour guider la puissance d'entraînement par l'intermédiaire du rapport de vitesse haut (5) vers la sortie, et
d) en chevauchement, fermer l'embrayage à friction (30) associé à la deuxième transmission partielle (32) et ouvrir l'embrayage à friction (20) associé à la première transmission partielle (22) pour guider la puissance d'entraînement par l'intermédiaire du rapport de vitesse bas (2) vers la sortie dès que la vitesse de rotation (nᵥ) du moteur à combustion interne (12) a atteint une vitesse de rotation cible (n₃) qui correspond au rapport de vitesse bas (2) dans la deuxième transmission partielle (32).

2. Chaîne cinématique (10) d'un véhicule automobile (11), la chaîne cinématique (10) présentant un moteur à combustion interne (12), une machine électrique (40) et une transmission à double embrayage (14), la transmission à double embrayage (14) présentant un premier trajet de transmission de puissance (26) avec un premier embrayage à friction (20) et une première transmission partielle (22) ayant des rapports de vitesse impairs ainsi qu'un deuxième trajet de transmission de puissance (36) avec un deuxième embrayage à friction (30) et une deuxième transmission partielle (32) ayant des rapports de vitesse pairs, et le moteur à combustion interne (12) étant accouplé à un élément d'entrée du premier embrayage à friction (20) et à un élément d'entrée du deuxième embrayage à friction (30), et la chaîne cinématique étant une chaîne cinématique hybride (10) qui présente une machine électrique (40) qui est accouplée à un élément de sortie du deuxième embrayage à friction (30),
la chaîne cinématique (10) présentant un dispositif de commande (49) qui est réalisé et conçu pour exécuter un procédé selon la revendication 1.
